# EUROPÄISCHE PATENTANMELDUNG

(11) **EP 3 457 180 A1**
(43) Veröffentlichungstag der Anmeldung: **20.03.2019**
(21) Anmeldenummer: 18194335.8
(22) Anmeldetag: 13.09.2018
(51) Int. Cl.: G01S 19/48, G01S 1/04, G06K 19/07, G01S 5/02

(54) **INNERHALB UND AUSSERHALB VON GEBÄUDEN VERWENDBARE MARKIERUNGSVORRICHTUNG ZUR LOKALISIERUNG VON OBJEKTEN**

(30) Priorität: 19.09.2017 DE 102017216549
(71) Anmelder: Robert Bosch GmbH, 70442 Stuttgart (DE)
(72) Erfinder: Donis, Dieter, Stowmarket, IP14 1EY (GB); Houis, Nicolas, 74321 Bietigheim-Bissingen (DE); Mahler, Michael, 70771 Leinfelden-Echterdingen (DE); Dunger, Hartmut, 75365 Calw (DE); Brenk, Achim, 75236 Kaempfelbach (DE); Koenig, Jens, 71706 Markgroeningen (DE); Seitz, Claudio, 76227 Karlsruhe (DE)

(57) **Zusammenfassung**

Markierungsvorrichtung (1), umfassend mindestens einen ersten Empfänger (11) für Signale (22a-22f) eines ersten Navigationssystems (2) sowie mindestens einen zweiten Empfänger (12) für Signale (32a-32d) eines zweiten Navigationssystems (3), eine Auswerteeinheit (13) zur Verarbeitung der empfangenen Signale zu einer Rückmeldung (14), aus der die Position (15) der Markierungsvorrichtung bestimmbar ist, sowie mindestens einen ersten Sender (16) zur drahtlosen Übermittlung der Rückmeldung an eine erste Gegenstelle (41), wobei der erste Empfänger eine geringere elektrische Leistungsaufnahme aufweist als der zweite Empfänger, wobei eine Energiesparlogik (18) vorgesehen ist, die dazu ausgebildet ist, den ersten Empfänger zu aktivieren und den zweiten Empfänger zu deaktivieren, wenn sich die Markierungsvorrichtung an einem von dem ersten Navigationssystem versorgten Ort befindet.

## Beschreibung

Die vorliegende Erfindung betrifft eine Markierungsvorrichtung zur Lokalisierung von Objekten, welche insbesondere auf Baustellen, Werksgeländen und in Fabrikhallen verwendbar ist.

### Stand der Technik

Auf Baustellen ist es auf Grund beengter Platzverhältnisse nicht immer möglich, jedem Gegenstand einen festen Lagerplatz zuzuweisen. Bei häufig verwendeten Gegenständen, und insbesondere bei Verbrauchsmaterialien, ist eine kontinuierliche Buchführung, was sich wo befindet, nicht praktikabel. Im Ergebnis wird auf Baustellen sehr viel Arbeitszeit damit verbracht, Gegenstände und Materialien zu suchen.

Die US 2014 240 143 A1 offenbart, die Position eines Objekts mit GPS zu bestimmen und vom Objekt aus mit Sub-1 GHz-Funk auszusenden.

Die DE 694 16 006 T2 offenbart die Steuerung von Arbeitsgeräten mit Hilfe von GPS. Die DE 60 2004 004 246 T2 beschreibt allgemeinen Stand der Technik zur Übergabe von Zustandsdaten von einem Fahrzeug aus.

GPS funktioniert innerhalb von Gebäuden oder an anderen Orten, an denen die direkte Sichtverbindung zum Satelliten abgeschattet ist, nur ungenau. Die US 8,624,725 B1 offenbart ein Lokalisierungssystem, das in derartigen Fällen auf andere Positionierungssysteme, wie etwa Ultrabreitband-(UWB)-Lokalisierung, ausweicht.

### Offenbarung der Erfindung

Im Rahmen der Erfindung wurde eine Markierungsvorrichtung entwickelt, die insbesondere mit einem zu lokalisierenden Objekt verbunden werden kann. Die Markierungsvorrichtung umfasst mindestens einen ersten Empfänger für Signale eines ersten Navigationssystems sowie mindestens einen zweiten Empfänger für Signale eines zweiten Navigationssystems.

Es ist eine Auswerteeinheit vorgesehen zwecks Verarbeitung der empfangenen Signale zu einer Rückmeldung, aus der die Position der Markierungsvorrichtung bestimmbar ist. Die Rückmeldung kann also beispielsweise eine schon fertig in Form von Koordinaten bestimmte Position umfassen, wie sie etwa aus einem GPS-Signal dekodiert wurde. Die Rückmeldung kann aber auch beispielsweise Laufzeiten von Signalen umfassen, die von einem oder mehreren Bakensendern ausgesendet und von der Markierungsvorrichtung registriert wurden. Aus derartigen Laufzeiten oder ähnlichen Vorprodukten lässt sich, beispielsweise auf einem externen Server, die Position der Markierungsvorrichtung bestimmen.

Die Markierungsvorrichtung besitzt mindestens einen ersten Sender zur drahtlosen Übermittlung der Rückmeldung an eine erste Gegenstelle, damit die Position der Markierungsvorrichtung letztendlich einem zentralen System bekanntgemacht werden kann.

Weiterhin weist ohne Beschränkung der Allgemeinheit der erste Empfänger eine geringere elektrische Leistungsaufnahme auf als der zweite Empfänger. Ursache hierfür kann beispielsweise sein, dass die Signale der Navigationssysteme mit unterschiedlichen Signalstärken ausgesendet werden. So wird beispielsweise ein GPS-Signal vom Satelliten mit einer deutlich geringeren Signalstärke ausgesandt, als beispielsweise das Signal einer Navigationsbake. Ebenso hat die Signalausbreitung aufgrund der stark unterschiedlichen Laufwege und der damit verbundenen Dämpfung für beide Navigationssysteme einen großen Einfluss auf die Abnahme der räumlichen Strahlungsdichte und damit auch auf den Energiebedarf beim Empfangen der Signale.

Die Markierungsvorrichtung weist eine Energiesparlogik auf, die dazu ausgebildet ist, den ersten Empfänger zu aktivieren und den zweiten Empfänger zu deaktivieren, wenn sich die Markierungsvorrichtung an einem von dem ersten Navigationssystem versorgten Ort befindet.

Wenn auf einer Baustelle oder in einer Produktionsstätte eine Vielzahl von Objekten zu verfolgen ist, ist der Personalaufwand, um in einer Vielzahl von Markierungsvorrichtungen turnusmäßig Batterien zu wechseln oder aufzuladen, in der Regel nicht wirtschaftlich. Daher ist es vorteilhaft, dass die Markierungsvorrichtung mit einer Lebensdauerbatterie versorgt wird. Dies wiederum koppelt die Lebensdauer der Markierungsvorrichtung an die Lebensdauer der Batterie. Die Energiesparlogik stellt nun sicher, dass das Vorhandensein zweier Empfänger für zwei verschiedene Navigationssysteme die Batterie nicht übermäßig beansprucht und somit die Lebensdauer der Markierungsvorrichtung nicht übermäßig verkürzt. Diese Energiesparlogik wählt situationsabhängig das optimale Navigationssystem aus, so dass entweder eine Minimierung des Energiebedarfs oder eine Optimierung der Genauigkeit der Positionsbestimmung gewährleistet wird.

Dass die Markierungsvorrichtung sich an einem von dem ersten Navigationssystem versorgten Ort befindet, soll insbesondere bedeuten, dass die Markierungsvorrichtung an diesem Ort die Signale des Navigationssystems empfangen kann, welche Rückschlüsse auf die Position der Markierungsvorrichtung zulassen. Der Begriff "versorgt" ist also nicht rein geometrisch, sondern funktechnisch zu verstehen. Es kann also beispielsweise ein weiter vom jeweiligen Sender entfernter Ort, der sich aber in freier Sichtlinie zum Sender befindet, durch den Sender versorgt sein, während ein wesentlich näherer, aber durch eine Betonwand abgeschatteter Ort nicht mehr versorgt ist.

Die Feststellung, ob sich die Markierungsvorrichtung an einem von dem ersten Navigationssystem versorgten Ort befindet, kann auf verschiedene Weisen getroffen werden.

So kann die Energiesparlogik beispielsweise dazu ausgebildet sein, ein Abreißen des vom ersten Navigationssystem empfangenen Signals dahingehend zu werten, dass sich die Markierungsvorrichtung an einem von dem ersten Navigationssystem nicht versorgten Ort befindet.

Sofern auf diese oder auf eine andere Weise festgestellt wird, dass am aktuellen Ort der Markierungsvorrichtung keine Versorgung durch das erste Navigationssystem gegeben ist, ist die Energiesparlogik in einer besonders vorteilhaften Ausgestaltung der Erfindung dazu ausgebildet, den ersten Empfänger zu deaktivieren und den zweiten Empfänger zu aktivieren. Beispielsweise kann eine Fabrikhalle oder auch ein Betriebsgelände mit einem lokal wirksamen Navigationssystem kurzer Reichweite ausgestattet sein, für das ein erster Empfänger mit sehr geringer Leistungsaufnahme genügt. Wird die Fabrikhalle bzw. das Betriebsgelände verlassen, kann die Markierungsvorrichtung noch beispielsweise mit GPS verfolgt werden, wobei dafür ein zweiter Empfänger eingesetzt werden muss, der mehr Energie verbraucht.

In einer weiteren besonders vorteilhaften Ausgestaltung der Erfindung ist die Energiesparlogik dazu ausgebildet, den ersten Empfänger intermittierend zu aktivieren zwecks Prüfung, ob sich die Markierungsvorrichtung an einem von dem ersten Navigationssystem versorgten Ort befindet. Dann kann wieder auf den energetisch genügsameren ersten Empfänger umgeschaltet werden, sobald das erste Navigationssystem wieder verfügbar ist. Beispielsweise kann der Fall eintreten, dass die Fabrikhalle bzw. das Betriebsgelände nur vorübergehend verlassen wird, etwa wenn eine Baumaschine für einen Arbeitstag zur Baustelle ausrückt. Es können auch beispielsweise Geräte oder Materialien zu einem anderen Standort des Unternehmens transportiert werden, der ebenfalls mit einem lokal wirksamen Navigationssystem ausgerüstet ist.

In einer weiteren besonders vorteilhaften Ausgestaltung der Erfindung ist die Energiesparlogik dazu ausgebildet, anhand der von der Markierungsvorrichtung ermittelten eigenen Position zu bestimmen, ob sich die Markierungsvorrichtung an einem von dem ersten Navigationssystem versorgten Ort befindet. Diese Bestimmung kann beispielsweise durch den Vergleich der Position mit einem "Geofence" erfolgen, welcher die von den unterschiedlichen Navigationssystemen versorgten Bereiche unterscheidet. Diese Art der Bestimmung ist nicht ganz so exakt wie eine funktechnische Bestimmung, dafür jedoch besonders energiesparend, da nur Daten verwendet werden, die auf der Markierungsvorrichtung ohnehin schon ermittelt werden.

In einer weiteren vorteilhaften Ausgestaltung der Erfindung ist die Energiesparlogik dazu ausgebildet, ein externes Steuersignal dahingehend zu empfangen, ob sich die Markierungsvorrichtung an einem von dem ersten Navigationssystem versorgten Ort befindet. Auf diese Weise kann noch mehr Rechenarbeit von der Markierungsvorrichtung, deren Batteriekapazität begrenzt ist, auf externe Server verlagert werden, die über Netzstrom verfügen.

Nicht nur beim Empfang von Signalen der Navigationssysteme lässt sich Energie einsparen. Auch der Energiebedarf für das Senden der Rückmeldung kann deutlich variieren, je nachdem, welche Gegenstelle erreicht werden muss. In einer besonders vorteilhaften Ausgestaltung der Erfindung ist daher ein zweiter Sender zur drahtlosen Übermittlung der Rückmeldung an eine zweite Gegenstelle vorgesehen, wobei der zweite Sender eine höhere elektrische Leistungsaufnahme aufweist als der erste Sender. Dabei ist die Energiesparlogik zusätzlich dazu ausgebildet, den ersten Sender zu aktivieren und den zweiten Sender zu deaktivieren, wenn eine drahtlose Verbindung zur ersten Gegenstelle verfügbar ist.

Beispielsweise kann der erste Sender ein Utrabreitband-(UWB-)Sender mit besonders kleiner Leistung sein. Wann immer das UWB-Navigationssystem verfügbar ist, kann dieses auch als Rückkanal für die Rückmeldung genutzt werden. Der zweite Sender kann beispielsweise Teil eines Low Power Wide Area Network, LPWAN, sein. Dieses Netzwerk kann beispielsweise ein LoRaWAN-Netzwerk sein. Für LoRaWAN-Netzwerke existieren genau wie für UWB-Systeme Allgemeinzuteilungen, so dass der Betrieb ohne Anmeldung aufgenommen werden kann. Prinzipiell könnte die Markierungsvorrichtung auch direkt über Mobilfunk angebunden werden, allerdings würde dann jede Markierungsvorrichtung ihre eigene SIM-Karte benötigen, und die Verfolgung von Objekten könnte aus wirtschaftlichen Gründen nur auf die wichtigsten Objekte konzentriert werden.

Auf einer Baustelle können beispielsweise die Rückmeldungen von vielen Markierungsvorrichtungen in einem Gateway gesammelt werden. Dieses Gateway kann dann entweder eine eigenständige Internetanbindung haben, beispielsweise über Mobilfunk, oder es kann über das LoRaWAN-Netzwerk eine Internetanbindung erhalten.

Nach dem zuvor Gesagten ist vorteilhaft der erste Empfänger ein Ultrabreitband-(UWB-) Empfänger, und der zweite Empfänger ist ein Empfänger für ein satellitengestütztes Navigationssystem, wie etwa GPS, Glonass oder Galileo.

Eine lückenlose Verfolgbarkeit von Bauteilen, Geräten, Werkstoffen und Materialien über UWB einerseits und über ein satellitengestütztes System andererseits ist insbesondere für die Industrialisierung des Tiefbaus und Hochbaus vorteilhaft. Hier werden Fertigbauteile in Fabrikhallen produziert und vorgefertigt, um anschließend mit Tiefladern auf die Baustelle transportiert und dort schließlich aufgestellt, montiert und zusammengebaut zu werden. Die logistischen Abläufe können nun nicht mehr nur entweder auf dem Werksgelände oder auf der Baustelle optimiert werden, sondern durchgängig.

Dabei ist in der Fabrikhalle und dem zugehörigen Betriebsgelände die höchste Genauigkeit bei der Positionsbestimmung gefordert, und zugleich ist in der Fabrikhalle die Genauigkeit der satellitengestützten Navigation am schlechtesten. Gefordert werden vielfach Genauigkeiten von wenigen Zentimetern, was mit UWB-Navigation möglich ist. Hierzu sind lediglich die Fabrikhalle bzw. das Betriebsgelände einmalig mit einer entsprechenden UWB-Infrastruktur auszurüsten.

Auf der Baustelle selbst genügt hingegen eine Genauigkeit von wenigen Metern. Zugleich ist es vorteilhaft, wenn dort der Installationsaufwand für die Infrastruktur minimal gehalten wird: Während die Infrastruktur an der Produktionsstätte für die Fertigteile viele Jahre lang genutzt wird, wird die Infrastruktur auf einer gegebenen Baustelle nur für die Dauer der jeweiligen Bauarbeiten benötigt. Daher sollte der Aufwand für die Installation und Deinstallation jeweils minimiert werden. Weiterhin ist es vorteilhaft, wenn auf Baustellen nicht zu viele hochwertige elektronische Geräte versammelt sind, da sich diese im Gegensatz zu den Fertigteilen wesentlich schneller abmontieren und entwenden lassen.

Die Kombination von UWB einerseits und Satellitennavigation andererseits ermöglicht also eine lückenlose Verfolgung von Bauteilen, wobei die Genauigkeit auf die jeweilige Anforderung in den unterschiedlichen Situationen abgestimmt ist und zugleich nicht mehr Energie aus der Lebensdauerbatterie der jeweiligen Markierungsvorrichtung bezogen wird als nötig.

Die Energiesparlogik kann weitere Sparmaßnahmen beinhalten. Sie kann beispielsweise dazu ausgebildet sein, die Empfänger, die Sender oder auch andere Schaltkreise der Markierungsvorrichtung nur in bestimmten vorgegebenen Zeitfenstern zu aktivieren, beispielsweise zu den Zeiten, mit denen planmäßig mit den verfolgten Objekten gearbeitet wird.

Alternativ oder auch in Kombination kann die Energiesparlogik beispielsweise dazu ausgebildet sein, die Empfänger, die Sender und/oder die anderen Schaltkreise intermittierend in Intervallen zu aktivieren, die sich progressiv verlängern, wenn sich die Position der Markierungsvorrichtung zwischenzeitlich nicht ändert.

Alternativ oder auch in Kombination kann die Energiesparlogik beispielsweise dazu ausgebildet sein, die Empfänger, die Sender und/oder die anderen Schaltkreise auf ein externes Funksignal hin zu aktivieren. Tritt beispielsweise auf der Baustelle der Fall ein, dass ein Bauteil dringend gesucht wird und ansonsten ein Stillstand droht, können mit einem derartigen Funksignal alle auf der Baustelle befindlichen Markierungsvorrichtungen dazu veranlasst werden, ungeachtet ihres jeweiligen Zeitplans für den intermittierenden Betrieb bei der nächsten Gelegenheit ihre Position zu bestimmen und zu melden.

Generell kann der Zeitplan für den intermittierenden Betrieb der Markierungsvorrichtung davon abhängen, welcher Empfänger aktiv ist, d.h., von welchem Navigationssystem die Markierungsvorrichtung gerade versorgt wird: Auf der Baustelle werden Updates der Position nur in deutlich größeren Intervallen benötigt als in der Fabrikhalle bzw. auf dem Betriebsgelände. Für einige Teile, wie etwa Transportgestelle, kann sogar eine Lokalisierung in Echtzeit und einer engen zeitlichen Taktung erforderlich sein, vor allem wenn diese transportfertig in engen räumlichen Abständen auf dem Betriebshof für den Weitertransport bereitstehen. So müssen beispielsweise Fertigbetonteile zunächst an einem bestimmten Ort auf dem Werksgelände trocknen, bevor sie weitertransportiert und gebaut werden können. Dabei ist unter anderem sicherzustellen, dass nicht etwa an Stelle eines bereits vollständig getrockneten Teils ein noch nicht vollständig getrocknetes Teil weitertransportiert und verwendet wird, was zu Bauschäden führen könnte.

Somit ist auch die auf der Baustelle anfallende Datenmenge im Vergleich zu der auf dem Betriebshof anfallenden Datenmenge eher gering, und das LoRaWAN-Netzwerk wird nur wenige "duty cycles" lang belastet.

Die Energiesparlogik kann ganz oder teilweise in Software implementiert sein, die beispielsweise auch als Update auf bestehende Markierungsvorrichtungen aufgespielt werden kann und insofern ein eigenständig verkaufbares Produkt ist. Die Erfindung bezieht sich daher auch auf ein Computerprogramm mit maschinenlesbaren Anweisungen, die, wenn sie auf einer Markierungsvorrichtung oder einem darin enthaltenen Computer oder eingebetteten System ausgeführt werden, die Markierungsvorrichtung zu einer Markierungsvorrichtung gemäß der Erfindung aufwerten. Ebenso bezieht sich die Erfindung auch auf einen maschinenlesbaren Datenträger oder ein Downloadprodukt mit dem Computerprogramm.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Schematischer Aufbau eines Ausführungsbeispiels der Markierungsvorrichtung 1;
Figur 2 Beispielhafte Verfolgung von Bauteilen 6a-6h auf einem Betriebsgelände 52 und einer Baustelle 54;
Figur 3 Beispielhafte Ortung der Markierungsvorrichtung 1 mit einem UWB-Navigationssystem 2;
Figur 4 Beispielhafte Ortung der Markierungsvorrichtung 1 mit einem satellitengestützten Navigationssystem 3.

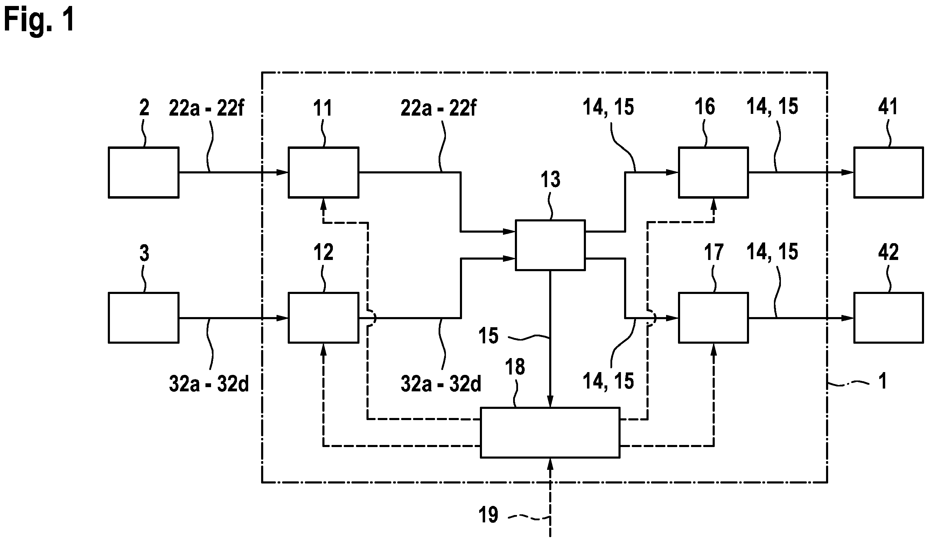

Nach Figur 1 umfasst die Markierungsvorrichtung 1 einen ersten Empfänger 11 für die Signale 22a-22f eines ersten Navigationssystems 2 sowie einen zweiten Empfänger 12 für die Signale 32a-32d eines zweiten Navigationssystems 3. Die Signale 22a-22f, 32a-32d werden von einer Auswerteeinheit 13 zu einer Rückmeldung 14 verarbeitet, aus der die Position 15 der Markierungsvorrichtung 1 bestimmbar ist. Die Markierungsvorrichtung 1 enthält einen ersten Sender 16 zur Übermittlung der Rückmeldung 14, 15 an eine erste Gegenstelle 41 sowie einen zweiten Sender 17 zur Übermittlung der Rückmeldung 14, 15 an eine zweite Gegenstelle 42.

Beispielsweise kann das erste Navigationssystem 2 ein Ultrabreitband-(UWB-)Navigationssystem mit hoher Genauigkeit und kurzer Reichweite sein, und das zweite Navigationssystem 3 kann satellitengestützt sein. Der erste Empfänger 11 hat dann einen wesentlich geringeren Energiebedarf als der zweite Empfänger 12.

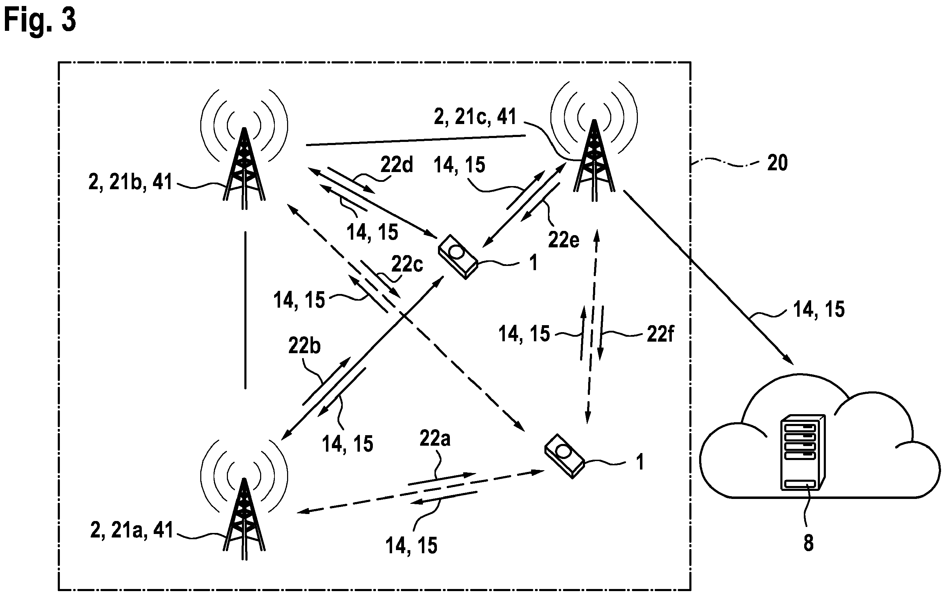

Beispielsweise kann die erste Gegenstelle 41 eine Station 21a-21c sein, die zu dem UWB-Navigationssystem 2 gehört und ein Signal 22a-22f an den ersten Empfänger 11 übermittelt. Die Markierungsvorrichtung 1 kann also bidirektional mit dieser Station 21a-21c kommunizieren, wie in Figur 3 näher erläutert wird. Die zweite Gegenstelle 42 kann beispielsweise zu einem LoRaWAN-Netz gehören. Der erste Sender 16 benötigt für die Übermittlung über eine sehr kurze Distanz zur ersten Gegenstelle 41 wesentlich weniger Energie als der zweite Sender 17 für die Übermittlung einer mittleren Distanz zur zweiten Gegenstelle 42 benötigt.

Die Markierungsvorrichtung 1 wird von einer in Figur 1 nicht eingezeichneten Lebensdauerbatterie gespeist und weist daher eine Energiesparlogik 18 auf. Wenn am Ort der Markierungsvorrichtung 1 das erste Navigationssystem 2 verfügbar ist, schaltet die Energiesparlogik 18 den ersten Empfänger 11 ein und den zweiten Empfänger 12 aus. Ist das erste Navigationssystem 2 nicht verfügbar, schaltet die Energiesparlogik 18 den zweiten Empfänger 12 ein und den ersten Empfänger 11 aus.

Wenn eine Funkverbindung zur ersten Gegenstelle 41 verfügbar ist, schaltet die Energiesparlogik 18 den ersten Sender 16 ein und den zweiten Sender 17 aus. Ist keine Funkverbindung zur ersten Gegenstelle 41 verfügbar, schaltet die Energiesparlogik 18 den zweiten Sender 17 ein und den ersten Sender 16 aus.

Diese Schaltvorgänge werden über Steuerleitungen gesteuert, die in Figur 1 gestrichelt eingezeichnet sind.

Zur Entscheidung, ob das erste Navigationssystem 2, bzw. die Funkverbindung zur ersten Gegenstelle 41, verfügbar ist, zieht die Energiesparlogik 18 in diesem Ausführungsbeispiel auch die von der Auswerteeinheit 13 ermittelte aktuelle Position 15 der Markierungsvorrichtung 1 im Sinne eines Geofencings heran. Die Entscheidung kann auch durch ein externes Steuersignal 19 vorgegeben werden.

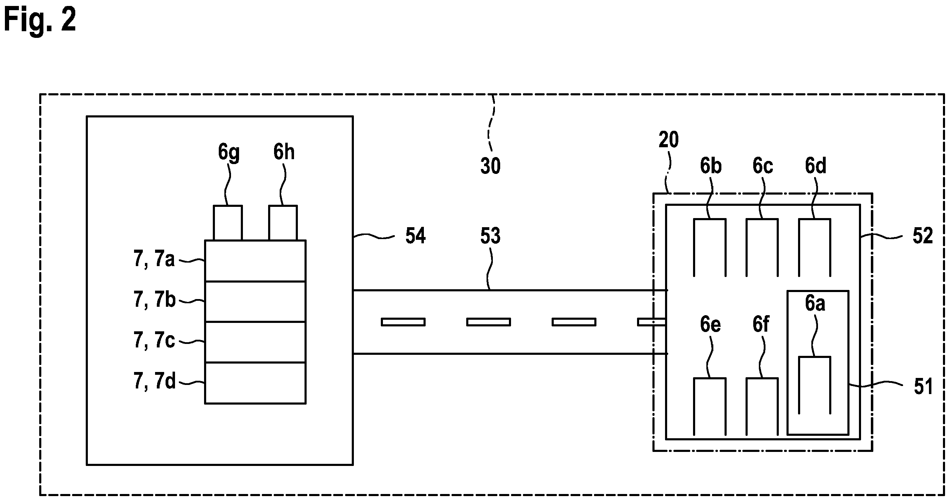

Figur 2 zeigt beispielhaft und nicht maßstabsgetreu ein Szenario des industrialisierten Hochbaus, in dem Fertigteile 6a-6h von der Produktion bis zur Verwendung zu verfolgen sind. Auf einem Betriebsgelände 52 befindet sich eine Fabrikhalle 51, in der ein hier beispielhaft eingezeichnetes Fertigteil 6a produziert wird. Auf dem Betriebsgelände 52 gibt es einen ersten Lagerplatz, auf dem hier beispielhaft eingezeichnete Fertigteile 6b bis 6d trocknen, und einen zweiten Lagerplatz, auf dem hier beispielhaft eingezeichnete Fertigteile 6e und 6f zum Abtransport bereitgestellt werden.

Der Abtransport erfolgt über eine Straße 53 zu einer Baustelle 54, auf der ein Gebäude 7 errichtet wird. In dem in Figur 2 eingezeichneten Zustand sind vier hier beispielhaft eingezeichnete Stockwerke 7a-7d bereits fertiggestellt, und zwei hier beispielhaft eingezeichnete Fertigteile 6g und 6h warten auf ihren Einbau in das Gebäude 7.

Jedes der Fertigteile 6a-6h ist mit einer Markierungsvorrichtung 1 versehen, die in Figur 2 aus Gründen der Übersichtlichkeit nicht eingezeichnet ist. Innerhalb des Bereiches 20, der die Fabrikhalle 51 und das Betriebsgelände 52 umfasst, ist das erste Navigationssystem 2 verfügbar. Innerhalb des Bereiches 30, der zusätzlich auch die Straße 53 und die Baustelle 54 umfasst, ist das zweite Navigationssystem 3 verfügbar. Beispielsweise ist ein satellitengestütztes Navigationssystem global verfügbar.

Figur 3 zeigt ein Szenario, in dem zwei beispielhaft eingezeichnete Markierungsvorrichtungen 1 sich im Versorgungsbereich 20 des ersten Navigationssystems 2 befinden. Drei Basisstationen 21a-21c des ersten Navigationssystems 2 senden Signale 22a-22f an die Markierungsvorrichtungen 1 und empfangen zugleich als Gegenstellen 41 von dort die jeweiligen Rückmeldungen 14, aus denen jeweils die Position 15 der betreffenden Markierungsvorrichtung 1 bestimmbar ist. Die Kommunikation zwischen den Basisstationen 21a-21c einerseits und den Markierungsvorrichtungen 1 andererseits ist also bidirektional.

Die Basisstationen 21a-21c sind untereinander vernetzt. Zusätzlich verfügt die Basisstation 21c über eine Uplink-Verbindung, über die die gesammelten Rückmeldungen 14, 15 von den Markierungsvorrichtungen 1 zur weiteren Auswertung und Verwaltung an einen externen Server 8 übermittelt werden.

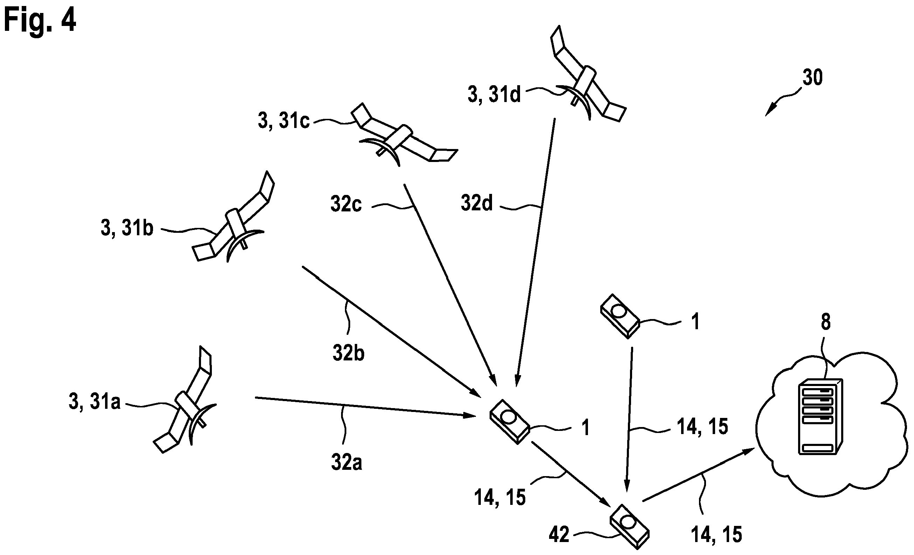

Figur 4 zeigt ein Szenario, in dem zwei beispielhaft eingezeichnete Markierungsvorrichtungen 1 sich lediglich im globalen Versorgungsbereich 30 des zweiten Navigationssystems 3, nicht jedoch im Versorgungsbereich 20 des ersten Navigationssystems 2 befinden. Das zweite Navigationssystem 3 umfasst vier hier beispielhaft eingezeichnete Satelliten 31a-31d, die Signale 32a-32d an die Markierungsvorrichtungen 1 senden. Die Rückmeldungen 14, 15 von den Markierungsvorrichtungen 1 werden über LoRaWAN auf einem Gateway 42 gesammelt, das allen Markierungsvorrichtungen 1 als gemeinsame zweite Gegenstelle dient. Analog zu Figur 3 werden die Rückmeldungen 14, 15 der Markierungsvorrichtungen 1 gesammelt an einen externen Server 8 übermittelt.

## Patentansprüche

1. Markierungsvorrichtung (1), umfassend mindestens einen ersten Empfänger (11) für Signale (22a-22f) eines ersten Navigationssystems (2) sowie mindestens einen zweiten Empfänger (12) für Signale (32a-32d) eines zweiten Navigationssystems (3), eine Auswerteeinheit (13) zur Verarbeitung der empfangenen Signale (22a-22f, 32a-32d) zu einer Rückmeldung (14), aus der die Position (15) der Markierungsvorrichtung (1) bestimmbar ist, sowie mindestens einen ersten Sender (16) zur drahtlosen Übermittlung der Rückmeldung (14) an eine erste Gegenstelle (41), wobei der erste Empfänger (11) eine geringere elektrische Leistungsaufnahme aufweist als der zweite Empfänger (12), **dadurch gekennzeichnet, dass** eine Energiesparlogik (18) vorgesehen ist, die dazu ausgebildet ist, den ersten Empfänger (11) zu aktivieren und den zweiten Empfänger (12) zu deaktivieren, wenn sich die Markierungsvorrichtung (1) an einem von dem ersten Navigationssystem (2) versorgten Ort (51, 52) befindet.

2. Markierungsvorrichtung (1) nach Anspruch 1, **dadurch gekennzeichnet, dass** die Energiesparlogik (18) dazu ausgebildet ist, ein Abreißen des vom ersten Navigationssystem (2) empfangenen Signals (22a-22f) dahingehend zu werten, dass sich die Markierungsvorrichtung (1) an einem von dem ersten Navigationssystem (2) nicht versorgten Ort (53, 54) befindet.

3. Markierungsvorrichtung (1) nach einem der Ansprüche 1 bis 2, **dadurch gekennzeichnet, dass** die Energiesparlogik (18) dazu ausgebildet ist, den ersten Empfänger (11) zu deaktivieren und den zweiten Empfänger (12) zu aktivieren, wenn sich die Markierungsvorrichtung (1) an einem von dem ersten Navigationssystem (2) nicht versorgten Ort (53, 54) befindet.

4. Markierungsvorrichtung (1) nach Anspruch 3, **dadurch gekennzeichnet, dass** die Energiesparlogik (18) dazu ausgebildet ist, den ersten Empfänger (11) intermittierend zu aktivieren zwecks Prüfung, ob sich die Markierungsvorrichtung (1) an einem von dem ersten Navigationssystem (2) versorgten Ort (51, 52) befindet.

5. Markierungsvorrichtung (1) nach einem der Ansprüche 1 bis 4, **dadurch gekennzeichnet, dass** die Energiesparlogik (18) dazu ausgebildet ist, anhand der von der Markierungsvorrichtung (1) ermittelten eigenen Position (15) zu bestimmen, ob sich die Markierungsvorrichtung (1) an einem von dem ersten Navigationssystem (2) versorgten Ort (51, 52) befindet.

6. Markierungsvorrichtung (1) nach einem der Ansprüche 1 bis 5, **dadurch gekennzeichnet, dass** die Energiesparlogik (18) dazu ausgebildet ist, ein externes Steuersignal (19) dahingehend zu empfangen, ob sich die Markierungsvorrichtung (1) an einem von dem ersten Navigationssystem (2) versorgten Ort (51, 52) befindet.

7. Markierungsvorrichtung (1) nach einem der Ansprüche 1 bis 6, **dadurch gekennzeichnet, dass** ein zweiter Sender (17) zur drahtlosen Übermittlung der Rückmeldung (14) an eine zweite Gegenstelle (42) vorgesehen ist, wobei der zweite Sender (17) eine höhere elektrische Leistungsaufnahme aufweist als der erste Sender (16) und wobei die Energiesparlogik (18) zusätzlich dazu ausgebildet ist, den ersten Sender (16) zu aktivieren und den zweiten Sender (17) zu deaktivieren, wenn eine drahtlose Verbindung zur ersten Gegenstelle (41) verfügbar ist.

8. Markierungsvorrichtung (1) nach Anspruch 7, **dadurch gekennzeichnet, dass** der erste Sender (16) ein Ultrabreitband-Sender ist und dass der zweite Sender (17) Teil eines Low Power Wide Area Network, LPWAN, ist.

9. Markierungsvorrichtung (1) nach einem der Ansprüche 1 bis 8, **dadurch gekennzeichnet, dass** der erste Empfänger (11) ein Ultrabreitband-Empfänger für ein UWB-Navigationssystem (2) ist und dass der zweite Empfänger (12) ein Empfänger für ein satellitengestütztes Navigationssystem (3) ist.

10. Computerprogramm, enthaltend maschinenlesbare Anweisungen, die, wenn sie auf einer Markierungsvorrichtung (1) oder einem darin enthaltenen Computer oder eingebetteten System ausgeführt werden, die Markierungsvorrichtung (1) zu einer Markierungsvorrichtung (1) nach einem der Ansprüche 1 bis 9 aufwerten.
